# EUROPÄISCHE PATENTSCHRIFT

(11) **EP 1 640 633 B1**
(45) Veröffentlichungstag und Bekanntmachung des Hinweises auf die Patenterteilung: **06.01.2010**
(21) Anmeldenummer: 04022664.9
(22) Anmeldetag: 23.09.2004
(51) Int. Cl.: F16D 69/02, C04B 35/80

(54) **Verfahren zur Herstellung von Carbon-Keramik-Bremsscheiben**
Process for manufacturing carbon-ceramic brake discs
Procédé de fabrication de disques de freins en carbone-céramique

(43) Veröffentlichungstag der Anmeldung: 29.03.2006
(73) Patentinhaber: AUDI AG, 85045 Ingolstadt (DE)
(72) Erfinder: Niewöhner ,Joachim, D-86485 Biberbach (DE); Stettberger,Markus, D-86695 Allmannshofen (DE); Sommer,Arno, D-86399 Bobingen (DE); Müller,Dunja, D-86609 Donauwörth (DE); Rosenlöcher, Jens, D-86153 Augsburg (DE)
(74) Vertreter: Deckers, Hellmuth Alexander

(56) Entgegenhaltungen:
- EP-A- 1 314 708
- EP-A- 1 323 944

## Beschreibung

Die Erfindung betrifft ein Verfahren zur Herstellung von Carbon-Keramik-Bremsscheiben.

Carbon-Keramik-Bremsscheiben und Verfahren zu deren Herstellung sind aus der Patentliteratur bekannt, beispielsweise aus der EP 0 797 555 A1. In diesem Dokument wird beschrieben, daß separat gefertigte Kern- und Reibkörper miteinander verbunden werden, wobei die Verbindungsschicht Siliciumcarbid enthält. Dabei kann die Infiltration mit Silicium für beide Körper separat erfolgen, die Carbon-Keramik-Bremsscheibe wird durch Aufeinanderlegen von einem silicierten Kernkörper und mindestens einem silicierten Reibkörper und durch Infiltrieren von flüssigem Silicium in den Spalt zwischen den Körper gefertigt. Nachteilig bei diesem Verfahren ist, daß zwischen der Reibschicht und dem Kernkörper eine Verbindungsschicht gebildet wird, die zum großen Teil aus Silicium besteht. Diese Schicht hat eine niedrigere Festigkeit als die faserverstärkte keramische Phase.

Aus der DE 100 66 044 A1 ist ein weiteres, verbessertes Verfahren bekannt, bei dem eine Carbon-Keramik-Bremsscheibe umfassend einen Kernkörper und wenigstens eine gesonderte Reibschicht hergestellt wird, indem zunächst Grünlinge für die Reibschicht separat gefertigt werden, diese Grünlinge in eine sogenannte Urform für den Kernkörper eingelegt werden und die Urform mit einem Material für den Kernkörper befüllt wird, aus diesem Verbund der Grünling für den Reibkörper hergestellt wird, der anschließend pyrolysiert und danach mit Silicium infiltriert wird.

Aus dem Dokument EP 1 323 944 A1 ist bekannt, daß zur Herstellung von Reibscheibe aus faserverstärkter Verbundkeramik zunächst Prepregs aus mindestens zwei Lagen von bidirektionalem Kohlenstoffasergewebe hergestellt werden, die anschließend ausgehärtet und zu einem C/C-Körper carbonisiert werden, dieser C/C-Körper mit carbonisierbaren Pechen, Harzen oder Polymeren imprägniert und gegebenenfalls erneut carbonisiert wird, und danach mindestens eine der Scheibenoberflächen mit einer Kohlenstoff-haltigen Reibschichtmasse beschichtet oder ein Reibschicht-Vorkörper auf mindestens eine Scheibenoberfläche aufgeklebt wird, und der erhaltene Körper carbonisiert und mit flüssigem Silicium infiltriert wird

Bei diesem Verfahren wird keine eigens hergestellte Verbindungsschicht zwischen Kern- und Reibkörper erfordert. Ebenso wird nur eine Silicierung notwendig, nämlich die des Verbundes aus Kern- und Reibkörper. In der Praxis hat sich jedoch gezeigt, daß dies Verfahren Nachteile aufweist. Da die Reibschicht deutlich dünner ist als der Kernkörper (ca. 0,5 mm bis 1,5 mm gegenüber ca. 20 mm bis ca. 40 mm), ist trotz besonderer Sorgfalt und Vorsicht ein hoher Verlust bei der Handhabung der spröden carbonisierten Grünlinge für die Reibschicht zu beklagen.

Es ist daher die Aufgabe der Erfindung, ein verbessertes Verfahren zur Herstellung von Carbon-Keramik-Bremsscheiben zur Verfügung zu stellen, bei dem die Handhabung vereinfacht und der Materialverlust reduziert ist.

Diese Aufgabe wurde gelöst, indem auf einen vorgefertigten carbonisierten Kernkörper mit einer unregelmäßigen oder regelmäßigen Aufrauhung der Oberfläche ein verformbares Material aufgepreßt wird, das nach den weiteren Verfahrensschritten die Reibschicht ergibt, und der so gebildete Preßkörper carbonisiert und anschließend siliciert wird.

In bevorzugter Weise wird für die Fertigung der Reibschicht ein Material eingesetzt, bei dem die verstärkenden Fasern Kurzfasern sind, deren mittlere Länge 30 mm nicht übersteigt. Bei dem Material für die Reibschicht handelt es sich bevorzugt um eine mit Kurzfasern aus Kohlenstoff verstärkte plastisch verformbare Masse, die beim Erhitzen unter Ausschluß von oxydierenden Gasen einen Rückstand aus porösem Kohlenstoff bildet, dessen Masse mindestens 50 % der eingesetzten nicht aus Fasern bestehenden Masse beträgt.

In weiterer bevorzugter Weise wird für das erfindungsgemäße Verfahren ein an der den Reibschichten zugewandten Oberfläche strukturierter Kernkörper eingesetzt, wobei die Strukturierung bevorzugt in Form von pyramidenförmigen, kegelförmigen oder kugelkappenförmigen Erhebungen oder Einbuchtungen oder furchenartigen Einkerbungen ist. Eine derartige Strukturierung der Oberfläche führt zu verbesserter Haftung der Reibschicht auf dem Kernkörper. Untersuchungen der Grenzschicht haben ergeben, daß sich die Kurzfasern des Reibschichtmaterials beim Verpressen durch die dabei erfolgenden Fließprozesse so anordnen, daß eine Verzahnung mit dem Rohling für den Kernkörper zu beobachten ist. Diese Verzahnung kann durch Strukturierung der Oberfläche des Kernkörpers und durch die Wahl der mittleren Länge der Kurzfasern im Reibschichtmaterial gefördert werden.

In überraschender Weise hat sich auch ergeben, daß bei der Verwendung von Kernkörpern mit strukturierter Oberfläche die Wärmeabfuhr von der Reibschicht nach innen deutlich verbessert wird. Bei gleicher mechanischer Belastung (Abbremsen aus einer definierten Geschwindigkeit innerhalb derselben Zeitspanne) wird bei Verwendung einer strukturierten Kernkörper-Oberfläche eine niedrigere Oberflächentemperatur gemessen als bei einer glatten Kernkörper-Oberfläche, bei ansonsten gleich aufgebauter Carbon-Keramik-Bremsscheibe.

In weiterer überraschender Weise hat sich ergeben, daß das erfindungsgemäße Verfahren auch zu einer Verbesserung der Gleichmäßigkeit der Reibbelagsdicke führt. Bei der getrennten Fertigung von Reibschicht-Körpern und Kernkörpern und anschließendem Verbinden durch Verkleben und gemeinsames Silicieren muß die fertige Carbon-Keramik-Bremsscheibe durch Schleifen nachbearbeitet werden, damit die Oberflächen exakt senkrecht zur Drehachse ausgerichtet sind. Dabei können bei ungleichmäßiger Silicierung oder ungleichmäßigem Klebschichtauftrag Unregelmäßigkeiten in der Dicke der Reibschicht nach dem Abschleifen entstehen, die die Nutzdauer der Carbon-Keramik-Bremsscheibe beinträchtigen. Dasselbe Problem ergibt sich beim Einlegen vorgefertigter Reibschichten in eine Preßform und gemeinsamen Verpressen mit der den Kernkörper bildenden Masse.

Bereits wegen der größeren Dicke der Kernkörper und der daraus resultierenden Robustheit ist die Handhabung der vorgefertigten Kernkörper unproblematisch. Beim Verpressen des vorgefertigten Kernkörpers mit dem Material für die Reibschicht hat sich überraschenderweise ergeben, daß offenbar wegen der Dickenverhältnisse und des besseren Fließens des Reibschichtmaterials die Reibschicht in gleichmäßiger Dicke ausgebildet wird. Dies kann noch unterstützt werden dadurch, daß der Kernkörper vorgewärmt in die Form zum Pressen eingelegt wird. Eine Minimaltemperatur für die Oberfläche des Kernkörpers von 50 °C hat sich dabei als vorteilhaft erwiesen. Die Haftung der aufgepreßten Reibschicht auf dem Kernkörper ist ebenfalls besser als beim Kleben der fertigen Körper und als bei Pressen des Materials für den Kernkörper zwischen vorgefertigten Reibschicht-Körpern. Dies führt zu einer Verbesserung der Festigkeit und zu einer weiteren Erhöhung der Verschleißbeständigkeit. Die beobachtete Verbesserung der Haftung wird durch die oben beschriebene Strukturierung der Oberfläche des Kernkörpers weiter gefördert.

Das Material für die Reibschicht enthält bevorzugt Massenanteile von 40 % bis 80 % an Verstärkungsfasern, die bevorzugt aus Kohlenstoff oder Graphit bestehen, bis zu 1 % an Polymeren, die bei Temperaturen von 900 °C bis 1000 °C rückstandslos (bis auf weniger als 1 % ihrer Ausgangsmasse) zersetzt werden, und 20 % bis 60 % an Bindemitteln bevorzugt ausgewählt aus duroplastischen Harzen und Pechen und Mischungen derselben, die eine Ausbeute von mindestens 50 % ihrer Ausgangsmasse an Kohlenstoff ergeben, wenn sie unter Ausschluß von oxydierenden Stoffen auf Temperaturen von 900 °C bis 1000 °C erhitzt (carbonisiert) werden, bevorzugt Phenolharzen oder Mischungen von Phenolharzen mit einem Massenanteil von bis zu 40 % in der Mischung an Pechen. Als rückstandslos sich zersetzendes Harz wird insbesondere Polyvinylalkohol bevorzugt. Die Summe der Massenanteile in den genannten Mischungen beträgt stets 100 %. Dabei ist die mittlere Faserlänge (Gewichtsmittel) maximal 30 mm, bevorzugt maximal 20 mm, und besonders bevorzugt maximal 10 mm. Besonders hohe Haftung wird erzielt, wenn die mittlere Faserlänge maximal 5 mm, insbesondere maximal 1 mm beträgt.

Für den Kernkörper werden längere Verstärkungsfasern als für die Reibschichten eingesetzt; bevorzugt beträgt hier die mittlere Faserlänge mehr als 30 mm, bevorzugt mindestens 40 mm, und besonders bevorzugt mindestens 50 mm. Bevorzugt ist ein Massenanteil von mindestens 20 % mit einer Faserlänge von mehr als 30 mm in den Verstärkungsfasern enthalten. Der Massenanteil an Verstärkungsfasern ist bevorzugt ebenfalls 40 % bis 80 %, als Bindemittel werden Phenolharze und Mischungen von Phenolharzen mit Pechen (Massenanteil der Peche in dieser Mischung bevorzugt von 10 % bis zu 25 %) bevorzugt. Der Kernkörper wird aus einer wie angegeben zusammengesetzten Masse gepreßt, wobei die Preßstempel an der dem Material zugewandten Seite glatt oder bevorzugt strukturiert sind, derart, daß auf der Oberfläche des Preßlings die gewünschte Positiv-Struktur aus der entsprechend negativ strukturierten Oberfläche des Preßstempels entsteht. Die Kernkörper werden nach dem Pressen oder während des Pressens gehärtet durch Abbinden des Harzes, und in einem geeigneten Ofen bei ca. 950 °C unter Ausschluß von oxydierenden Stoffen carbonisiert. Es bildet sich dabei ein poröser, aber mechanisch fester Körper.

Zur Fertigung der erfindungsgemäß zusammengesetzten Carbon-Keramik-Bremsscheibe werden nun Preßformen für die Bremsscheiben zuerst mit einer ausreichenden Menge des Materials für die Reibschicht gefüllt. Auf diese Schicht wird nun der carbonisierte Kernkörper gelegt, er wird wiederum mit der ausreichenden Menge an Reibschichtmasse belegt, die Preßform wird verschlossen auf den Pressentisch gelegt, und der Mehrschichtverbund wird bei Raumtemperatur oder erhöhter Temperatur verpreßt. Durch die größerer Höhe oder Dicke des vorgefertigten Kernkörpers ist das Einbringen dieses Körpers in die Preßform ohne Schwierigkeiten möglich (kein Verkanten), während beim Einlegen vorgefertigter Reibschichten das dünne Plättchen leicht verkanten und dabei auch leicht zerbrechen konnte.

Es hat sich bei den Versuchen, die zu dieser Erfindung geführt haben, auch gezeigt, daß die günstige Wirkung der Oberflächenstrukturierung auch durch die Porosität der Oberfläche des Kernkörpers besonders unterstützt wurde. Eine entsprechende Strukturierung der Oberfläche der vorgefertigten Reibschicht wäre bereits aus geometrischen Gründen (wegen der geringen Dicke der Reibschichten) nicht möglich gewesen. Es hat sich weiter als günstig erwiesen, wenn durch Inhomogenität des Materials für den Kernkörper eine höhere Porosität in der Nähe der Deckflächen des Kernkörpers erzeugt wird. Dies kann einfach dadurch erreicht werden, daß in der Nähe der Deckflächen die Mischung einen größeren Anteil an Harzen mit einer niedrigeren Kohlenstoff-Ausbeute enthält.

Besonders günstige Ergebnisse in der Haftung werden erzielt, wenn die Carbonisierung des Kernkörpers nicht vollständig durchgeführt wird, sondern lediglich bis zu einem Zustand, bei dem der Masseverlust durch die Zersetzung des Bindemittels erst 80 % des Maximalwertes erreicht hat.
Carbon-Keramik-Bremsscheiben, die gemäß der Erfindung hergestellt wurden, zeigten bei der Prüfung insbesondere bei thermocyclischer Beanspruchung eine längere Lebensdauer als Scheiben, die mit vorgefertigten Reibschichten hergestellt wurden, oder auch als solche, bei denen Reibkörper und Bremskörper separat hergestellt und dann verklebt und gemeinsam siliciert wurden.

## Patentansprüche

1. Verfahren zur Herstellung von Carbon-Keramik-Bremsscheiben umfassend die Schritte
- Herstellen eines carbonisierten Kernkörpers durch Verpressen einer Mischung enthaltend Verstärkungsfasern und ein Bindemittel, Härten des Bindemittel durch Erwärmen, und Carbonisieren durch Erhitzen des gepreßten Körpers unter Ausschluß von oxydierenden Stoffen auf eine Temperatur zwischen 750 °C und 1300 °C,
- Aufpressen eines verformbaren, Verstärkungsfasern enthaltenden Materials auf den vorgefertigten carbonisierten Kernkörper, das nach den weiteren Verfahrensschritten die Reibschicht ergibt,
- Härten des Materials für die Reibschicht, Carbonisieren des gesamten Körpers und anschließende Infiltration des Verbundkörpers mit flüssigem Silicium,
**dadurch gekennzeichnet, daß** der Kernkörper an der den Reibschichten zugewandten Oberfläche strukturiert ist, wobei die Strukturierung eine unregelmäßige oder regelmäßige Aufrauhung der Oberfläche ist.

2. Verfahren nach Anspruch 1, **dadurch gekennzeichnet, daß** die Strukturierung der Oberfläche des Kernkörpers in Form von pyramidenförmigen, kegelförmigen oder kugelkappenförmige Erhebungen oder Einbuchtungen oder furchenartigen Einkerbungen ist.

3. Verfahren nach Anspruch 1, **dadurch gekennzeichnet, daß** für die Reibschicht ein Material eingesetzt wird, bei dem die verstärkenden Fasern Kurzfasern sind, deren mittlere Länge 5 mm nicht übersteigt

4. Verfahren nach Anspruch 1, **dadurch gekennzeichnet, daß** das Material für die Reibschicht Massenanteil enthält von 40 % bis 80 % an Verstärkungsfasern, bis zu 1 % an Polymeren, die bei Temperaturen von 900 °C bis 1000 °C rückstandslos zersetzt werden, und 20 % bis 60 % an Harzen, die eine Ausbeute von mindestens 50 % ihrer Ausgangsmasse an Kohlenstoff ergeben, wenn sie unter Ausschluß von oxydierenden Stoffen auf Temperaturen von 900 °C bis 1000 °C erhitzt werden.

5. Verfahren nach Anspruch 1, **dadurch gekennzeichnet, daß** die Carbonisierung des Kernkörpers im ersten Schritt des Verfahrens lediglich bis zu einem Zustand geführt wird, bei dem der Masseverlust durch die Zersetzung des Bindemittels erst 80 % des Maximalwertes erreicht hat

6. Verfahren nach Anspruch 1, **dadurch gekennzeichnet, daß** die mittlere Länge der Verstärkungsfasern im Kernkörper mehr als 30 mm beträgt.

7. Verfahren nach Anspruch 1, **dadurch gekennzeichnet, daß** die mittlere Länge der Verstärkungsfasern in der Reibschicht maximal 30 mm beträgt.

8. Verfahren nach Anspruch 1, **dadurch gekennzeichnet, daß** als sich rückstandslos zersetzendes Polymer Polyvinylalkohol verwendet wird.

9. Verfahren nach Anspruch 1, **dadurch gekennzeichnet, daß** als Bindemittel für den Kernkörper Mischungen von Phenolharzen und Pechen eingesetzt werden.

10. Verfahren nach Anspruch 9, **dadurch gekennzeichet, daß** der Massenanteil von Pechen in den Mischungen von 10 % bis 25 % beträgt.

## Claims

1. A process for producing carbon-ceramic brake disks, which comprises the steps of
- producing a carbonized core body by pressing a mixture comprising reinforcing fibers and a binder, curing the binder by heating and carbonizing by heating the pressed body in the absence of oxidizing materials to a temperature in the range from 750 °C and 1300 °C,
- pressing of a moldable material containing reinforcing fibers onto the prefabricated carbonized core body to form the friction layer after the further process steps,
- curing of the material for the friction layer, carbonization of the total body and subsequent infiltration of the composite with liquid silicon,
wherein the core body is structured on the surface facing the friction layers, with the structuring being an irregular or regular roughening of the surface.

2. The process as claimed in claim 1, wherein the structuring of the surface of the core body is in the form of pyramidal, conical or part-spherical raised regions or depressions or furrow-like grooves.

3. The process as claimed in claim 1, wherein a material in which the reinforcing fibers are short fibers having an average length which does not exceed 5 mm is used for the friction layer.

4. The process as claimed in claim 1, wherein the material for the friction layer comprises from 40 to 80 % by mass of reinforcing fibers, up to 1 % of polymers which decompose without leaving a residue at temperatures of from 900 °C to 1000 °C and from 20 to 60 % by mass of resins which give a yield of carbon corresponding to at least 50 % of their initial mass when they are heated in the absence of oxidizing materials to temperatures of from 900 °C to 1000 °C.

5. The process as claimed in claim 1, wherein the carbonization of the core body in the first step of the process is carried out only to a state in which the decreasing mass due to the decomposition of the binder has reached only 80 % of the maximum value.

6. The process as claimed in claim 1, wherein the average length of the reinforcing fibers in the core body is more than 30 mm.

7. The process as claimed in claim 1, wherein the average length of the reinforcing fibers in the friction layer is not more than 30 mm.

8. The process as claimed in claim 1, wherein polyvinyl alcohol is used as polymer which decomposes without leaving a residue.

9. The process as claimed in claim 1, wherein mixtures of phenolic resins and pitches are used as binder for the core body.

10. The process as claimed in claim 9, wherein the proportion of pitches in the mixtures is from 10 to 25 % by mass.

## Revendications

1. Procédé de fabrication de disques de freins en carbone-céramique, comprenant les étapes de
- fabrication d'un corps central carbonisé par compression d'un mélange contenant des fibres de renforcement et un liant, durcissement du liant par chauffage et carbonisation par chauffage du corps compressé en excluant les substances oxydantes à une température entre 750° C et 1300° C,
- élaboration de la liaison par compression d'un matériau contenant les fibres de renforcement déformables sur le corps central carbonisé préparé qui donne, après les autres étapes du procédé, la couche de frottement,
- durcissement du matériau pour la couche de frottement, carbonisation du corps complet et ensuite, infiltration du corps composite par du silicium liquide,
**caractérisé en ce que** le corps central est structuré au niveau de la surface orientée vers les couches de frottement, la structuration étant d'un aspect irrégulier ou régulier.

2. Procédé selon la revendication 1, **caractérisé en ce que** la structuration de la surface du corps central se présente sous la forme de soulèvements ou de creux de type pyramidal, conique ou sphérique ou d'entailles de type sillons.

3. Procédé selon la revendication 1, **caractérisé en ce que** pour la couche de frottement, on utilise un matériau dans lequel les fibres renforcées sont des fibres courtes dont la longueur moyenne ne dépasse pas 5 mm.

4. Procédé selon la revendication 1, **caractérisé en ce que** le matériau pour la couche de frottement contient en proportion en poids, de 40 % à 80 % de fibres de renforcement, jusqu'à 1 % de polymères qui sont décomposés à des températures de 900° C à 1000° C sans résidus et 20 % à 60 % de résines qui donnent un rendement d'au moins 50 % de leur poids de départ en carbone, lorsqu'elles sont chauffées en excluant les substances oxydantes à des températures de 900° C à 1000° C.

5. Procédé selon la revendication 1, **caractérisé en ce que** la carbonisation du corps central est réalisée à la première étape du procédé uniquement jusqu'à un état dans lequel la perte en poids par décomposition du liant atteint 80 % de la valeur maximale.

6. Procédé selon la revendication 1, **caractérisé en ce que** la longueur moyenne des fibres de renforcement dans le corps central est supérieure à 30 mm.

7. Procédé selon la revendication 1, **caractérisé en ce que** la longueur moyenne des fibres de renforcement est au maximum de 30 mm dans la couche de frottement.

8. Procédé selon la revendication 1, **caractérisé en ce que** l'on utilise comme polymère se décomposant sans résidu, de l'alcool de polyvinyle.

9. Procédé selon la revendication 1, **caractérisé en ce que** l'on utilise comme liant pour le corps moulé, des mélanges de résines phénoliques et de goudrons.

10. Procédé selon la revendication 9, **caractérisé en ce que** la proportion en poids des goudrons dans les mélanges est de 10 % à 25 %.
